# EUROPÄISCHE PATENTANMELDUNG

(11) **EP 2 237 594 A1**
(43) Veröffentlichungstag der Anmeldung: **06.10.2010**
(21) Anmeldenummer: 09157115.8
(22) Anmeldetag: 01.04.2009
(51) Int. Cl.: H04W 24/06, H04B 17/00, H04W 88/02

(54) **Anordnung und Verfahren zum Testen der Funktionalität einer Basisstation**

(71) Anmelder: Signalion GmbH, 01099 Dresden (DE)
(72) Erfinder: Fliess, Thomas, 01097 Dresden (DE); Musch, Peter, 01445Radebeul (DE)
(74) Vertreter: Lippert, Stachow & Partner

(57) **Zusammenfassung**

Der Erfindung, welche eine Anordnung und ein Verfahren zum Testen der Funktionalität einer Basisstation (1) betrifft, liegt die Aufgabe zugrunde, eine Anordnung und ein Verfahren zum Testen der Funktionalität einer Basisstation anzugeben, womit der Aufwand für den Test der Funktionalität einer Basisstation verringert wird. Die Aufgabe wird anordnungsseitig dadurch gelöst, dass das Testendgerät (4) eine zwischen zwei Übertragungskanälen umschaltbare Anordnung (11) zur Kanalsimulation aufweist, welche in Sendesignallaufrichtung vor der Sendestufe (5) angeordnet ist.

## Beschreibung

Die Erfindung betrifft eine Anordnung zum Testen der Funktionalität einer Basisstation, bestehend aus einer zwei Empfangswege hinsichtlich ihrer Empfangsgüte auswählenden Basisstation und einem ein Endgerät simulierenden Testendgerät, welches eine Sendestufe mit einem Antennenausgang aufweist.

Die Erfindung betrifft auch ein Verfahren zum Testen der Funktionalität einer Basisstation, wobei ein ein Endgerät simulierendes Testendgerät zur Basisstation ein erstes Testsignal sendet, welches durch einen ersten Übertragungsweg verändert, von der Basisstation als erstes Empfangssignal empfangen wird und nachfolgend das Testendgerät zur Basisstation ein zweites Testsignal sendet, welches durch einen zweiten Übertragungsweg verändert, von der Basisstation als zweites Empfangssignal empfangen wird.

In zellularen Mobilfunknetzen sind mehrere
Mobilfunkbasisstationen, meist auch als Basisstationen (BS) bezeichnet, angeordnet, welche entweder direkt oder über ein hierarchisches Netzwerk miteinander verbunden sind. Das Netzwerk ist weiterhin mit verschiedenen Festnetzen verbunden.

Eine derartige Basisstation wird beispielsweise in einem UMTS-Mobilfunknetz als NodeB oder im zukünftigen 3GPP-LTE-Mobilfunknetz als eNodeB bezeichnet.

Die Basisstationen verfügen über verschiedene Baugruppen, umfassend mindestens eine Funkschnittstelle mit mindestens einer Antenne, eine Anordnung zur analogen
Signalverarbeitung und Ressourcen zur digitalen
Signalverarbeitung, welche beispielsweise mittels eines DSP, FPGA oder ASIC realisiert werden.

Die mobilen Endgeräte, auch als "user equipment" (UE) bezeichnet, bauen je eine Funkverbindung über die Basisstationen ihrer aktuellen Zelle zum Netzwerk auf. Dabei kennzeichnet die aktuelle Zelle eine räumliche Zuordnung des mobilen Endgeräts im Mobilfunknetz. Bewegt sich das mobile Endgerät UE, so verändert sich die Qualität der Verbindung beispielsweise zu einer ersten Basisstation, mit welcher das mobile Endgerät eine Verbindung hergestellt hat.

Bei der Entwicklung von Kommunikationssystemen, welche beispielsweise auf den Verfahren OFDMA- oder SC-FDMA basieren können, besteht die Notwendigkeit derartige Basistationen hinsichtlich ihrer Funktionalität mit Endgeräten zu testen.

Für derartige Tests der Funktionalitäten der Basisstationen werden meist sogenannte Testendgeräte (Test-UE) verwendet, welche die Endgeräte teilweise oder in ihrem vollen Funktionsumfang nachbilden.

In vielen Fällen besitzen Endgeräte nicht nur eine, sondern zwei oder mehrere Antennen, wobei aus Gründen des Aufwands und des Stromverbrauchs häufig nur eine Sendeendstufe im Sendezweig des Endgerätes vorgesehen ist.

Daher weisen derartige Endgeräte einen Antennenumschalter auf, welcher zwischen der Sendeendstufe und den Antennen angeordnet ist und das in der Sendeendstufe erzeugte Sendesignal zu einer der über den Antennenumschalter selektierbaren Antennen weiterleitet.

Aus der DE 103 56 273 B4 ist eine derartiger Antennenumschalter sowie ein zugehöriges Verfahren zum Umschalten zwischen mindestens zwei Antenneneinheiten bekannt. Dieser Antennenumschalter weist einen Eingang und mindesten zwei Ausgänge auf, an welche Antennen angeschlossen werden. Dabei wird mittels eines Steuersignals festgelegt, welcher Ausgang des Antennenumschalters mit dem Eingang verbunden werden soll.

Aus der WO 2008/070418 ist eine weiterer Antennenumschalter aus dem Stand der Technik bekannt.

Durch ein von der Basisstation gesendetes Befehlswort wird das Endgerät aufgefordert Daten mittels einer spezifischen Antenne zu senden oder die Sendeantenne zu wechseln. Gesteuert durch dieses Befehlswort wird die vorgegebene Antenne durch das Endgerät ausgewählt, indem ein entsprechendes den Antennenumschalter steuerndes Steuersignal erzeugt wird, und nachfolgend Daten- meist Testdaten - über diese Antenne gesendet.

Die so gesendeten Daten werden von der Antenne angestrahlt, über einen Übertragungskanal übertragen und von der Basisstation empfangen. Die Basisstation wertet die empfangenen Daten aus und ermittelt derart die Sendeantenne des Endgerätes mit welcher die Datenübertragung am besten, beispielsweise in Bezug auf eine Bitfehlerrat, eine Übertragungsgeschwindigkeit, ein Signal/Rauschverhältnis oder ähnliche Parameter, erfolgt ist.

Die derart ermittelte "optimale" Antenne wird nachfolgend für die Datenübertragung zwischen der Basisstation und dem Endgerät sowie umgekehrt genutzt.

Im Rahmen der Tests der Verbindung zwischen der Basisstation und einen Testendgerät, welche in einer Testumgebung beispielsweise einem Labor durchgeführt werden, ist es zur Beurteilung der Funktionsfähigkeit derartiger Kommunikationssysteme besonders wichtig die Funktionalität der Basisstation hinsichtlich der Steuerung der Antennenumschaltung am Endgerät zu testen.

Bei derartigen Tests wird die korrekte Funktion und Leistungsfähigkeit der Umschaltkontrolle getestet. Des Weiteren werden die Algorithmen zur Messung der Kanaleigenschaften zwischen jeder verfügbaren Antenne des Endgerätes und der Basisstation und zur Selektion der am besten geeigneten Antenne auf ihre Funktion und Leistungsfähigkeit getestet.

Für diese Tests ist die Parametrisierbarkeit und Reproduzierbarkeit der Kanaleigenschaften jedes Übertragungskanals notwendig. Zudem ist es wünschenswert, gezielt Szenarien mit spezifischen Eigenschaften hinsichtlich auszuwählender Antennen vorgeben zu können.

Im Stand der Technik werden derartige Test mittels eines Endgeräts mit einer Sendeendstufe und einem zwischen der Sendeendstufe und den Antennen angeordneten
Antennenumschalter realisiert.

Alternativ sind auch Testanordnungen bekannt, welche zwei schaltbare Sendeendstufen mit je einer angeschlossenen Antenne aufweisen, wobei jeweils nur die Sendeendstufe betrieben wird, welche zu der zu selektierenden Antenne zugeordnet ist.

In beiden Fällen werden die jeweiligen Verbindungen zwischen den Endgeräten und der Basisstation mittels Kanalsimulatoren zur Simulation eines Übertragungskanals mit reproduzierbaren und parametrisierbaren Kanalbedingungen hergestellt. Der Kanalsimulator kann als eine externe separate Anordnung oder intern als Bestandteil des Testgerätes ausgeführt werden.

Somit besteht ein erster Nachteil derartiger Testanordnungen darin, dass mehrere Kanalsimulatoren benötigt werden, da ein Kanalsimulator lediglich einen Übertragungskanal nachbilden kann.

Außerdem wird ein Antennenumschalter als eine analoge zwischen der Sendeendstufe und den Antennen angeordnete zusätzliche Anordnung benötigt, welcher einen erhöhten Aufwand für das Testequipment darstellt und des Sendesignal durch seine nicht idealen Übertragungseigenschaften beeinflusst.

Wird der Testaufbau mittels zweier Sendebaugruppen realisiert welche wahlweise betrieben werden, kann ein aufwändiger Antennenumschalter entfallen. In dieser Testanordnung treten aber andere Nachteile auf, welche in der Notwendigkeit des schnellen und zeitgleichen Ein- und Ausschaltens der Sendebaugruppen und in den Abweichungen der Sendebaugruppen zueinander, beispielsweise bezüglich der Signalübertragungseigenschaften liegen.

Die Aufgabe der Erfindung besteht somit darin, eine Anordnung und ein Verfahren zum Testen der Funktionalität einer Basisstation anzugeben, womit der Aufwand und die Kosten für den Test der Funktionalität einer Basisstation verringert wird und die Nachteile aus dem Stand der Technik überwunden werden.

Gemäß der Erfindung wird die Aufgabe mit einer Anordnung zum Testen der Funktionalität einer Basisstation der eingangs genannten Art dadurch gelöst, dass das Testendgerät eine zwischen zwei Übertragungskanälen umschaltbare Anordnung zur Kanalsimulation aufweist, welche in Sendesignallaufrichtung vor der Sendestufe angeordnet ist.

Das erfindungsgemäße Endgerät bzw. Testendgerät beinhaltet eine Sendeanordnung mit einem Antennenausgang an welchen eine Antenne oder eine Leitungsverbindung anschließbar ist. Dieser Sendeanordnung vorgeschaltete ist eine Anordnung oder Stufe zur Erzeugung des zu sendenden Sendesignals. In dieser Stufe wird das Sendesignal in einer digitalen Form erzeugt. Gemäß der Erfindung erfolgt in dieser Stufe mittels eines Kanalmodells eine Veränderung des zu sendenden Sendesignals bevor es von der Sendestufe gesendet wird.

Gemäß der Erfindung wird die Aufgabe mit einem Verfahren zum Testen der Funktionalität einer Basisstation der eingangs genannten Art dadurch gelöst, dass das Testsignal vor dem Senden im Testendgerät derart verändert wird, dass ein erstes mit einem ersten Übertragungsweg verändertes erstes Empfangssignal oder ein zweites über einen zweiten Übertragungsweg verändertes zweites Empfangssignal ausgegeben wird.

In einer der Sendestufe vorgelagerten Stufe zur digitalen und analogen Signalverarbeitung, in welcher ein zu sendendes Sendesignal erzeugt wird, erfolgt mittels eines Kanalmodells eine Beeinflussung des zu erzeugenden Sendesignals derart, dass mittels dieser Veränderung bereits die zu erwartende Veränderung des Signals über den Übertragungskanal bestehend aus Sendeantenne - Luftübertragungsstrecke - Empfangsantenne abgebildet wird. Somit wird nicht ein Sendesignal nach dem Stand der Technik erzeugt sondern das im Stand der Technik vorliegende Empfangssignal am Eingang der Empfangsanordnung der Basisstation. Dieses Signal wird in der vorliegenden Erfindung auch als Testsignal bezeichnet.

Durch eine Beeinflussung von Parametern, welche das Kanalmodell steuern, können verschieden Übertragungskanäle und somit verschieden Übertagungswege des Sendesignals über unterschiedliche Antennen und unterschiedliche Luftübertragungsstrecken abgebildet werden.

In einer besonderen Ausführung ist vorgesehen, dass die Veränderung des Testsignals in seiner digitalen Form erfolgt.

In der der Sendestufe vorgeschalteten Stufe zur digitalen und analogen Signalverarbeitung wird das zu sendende Signal in einer digitalen Form erzeugt und nachfolgend einer Digital-Analog-Wandlung unterzogen bevor es der Sendeanordnung zugeführt wird. Die erfindungsgemäße Beeinflussung des zu erzeugenden Sendesignals und somit die Erzeugung des Testsignals erfolgt vorzugsweise in einem Bereich in welche das Sendesignal noch in der digitalen Form vorliegt. Diese Veränderung des Sendesignals in der digitalen Form vereinfacht sowohl den schaltungs- als auch den verfahrenstechnischen Aufwand zur Veränderung des Sendesignals.

### Die Lösung soll nachfolgend anhand eines

Ausführungsbeispiels näher erläutert werden. In den zugehörigen Zeichnungen zeigt
- Fig. 1: eine allgemeine Darstellung einer Basisstation BS und eines Endgerätes UE,
- Fig. 2: eine Testanordnung, bestehend aus einer Basisstation, einem Testendgerät mit einem Antennenumschalter und zwei Kanalsimulatoren,
- Fig. 3: eine Testanordnung, bestehend aus einer Basisstation, einem Testendgerät mit zwei auswählbaren Sendeendstufen und zwei Kanalsimulatoren und
- Fig. 4: eine erfindungsgemäße Testanordnung mit einer Basisstation und einem Testendgerät.

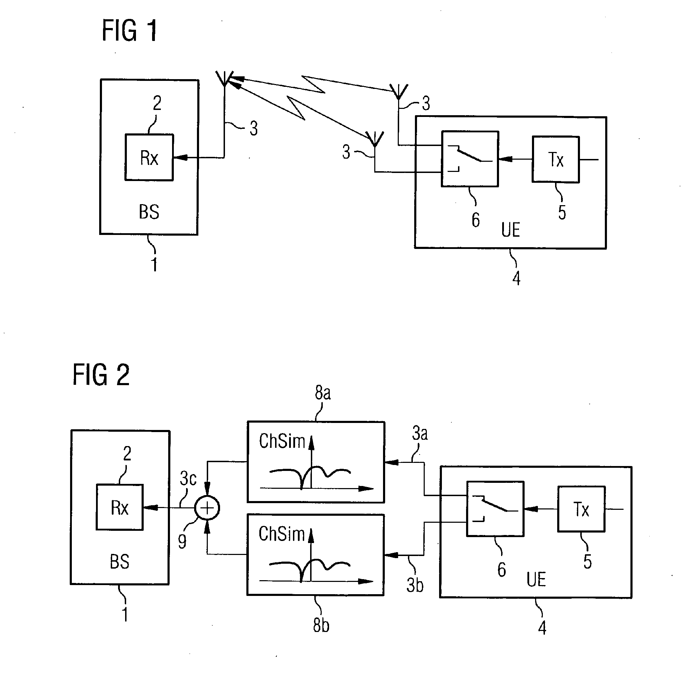

In den Darstellungen der Figuren 1 bis 4 sind nur die für die Erläuterung der Erfindung wesentlichen Baugruppen einer Basisstation bzw. eines Endgeräts dargestellt.

In der Figur 1 ist ein allgemeines Szenario in einem Mobilfunknetz dargestellt. Eine Basisstation 1 enthält mindestens eine Empfangsanordnung 2, an welcher eine Antenne 3 angeschlossen ist, welche als Empfangsantenne betrieben wird.

Weiterhin ist ein Endgerät 4 mit einer Sendeanordnung 5 und einem Antennenumschalter 6 dargestellt. Der

Antennenumschalter 6 weist einen Eingang für das von der Sendeanordnung 5 erzeugte Sendesignal auf, welches auf einen der zwei Ausgänge des Antennenumschalters 6 alternativ durchgeschaltet wird. An den Ausgängen des Antennenumschalters 6 ist jeweils eine Antenne 3 angeschlossen, welche als Sendeantenne betrieben wird.

Üblicherweise ist in einem Endgerät 4 in Signallaufrichtung vor der Sendeanordnung 5 eine Stufe zur digitalen und analogen Signalverarbeitung angeordnet, welche in den Figuren nicht dargestellt ist. In dieser Stufe wird das zu sendende Signal in einer digitalen Form erzeugt und nachfolgend mit einem Digital-Analog-Wandler in ein analoges Signal gewandelt, bevor es in die Sendeanordnung 5 eingespeist wird.

Auf der Seite der Basisstation 1 ist in Analogie hierzu in Signallaufrichtung nach der Empfangsanordnung 2 eine Stufe zur analogen und digitalen Signalverarbeitung angeordnet. Mittels dieser Stufe wird das von der Empfangsanordnung 2 ausgegebene analoge Empfangssignal mit einem Analog-DigitalWandler in ein digitales Signal gewandelt und einer nachfolgenden Signalverarbeitung, beispielsweise in einer Basisbandanordnung, unterzogen, wobei das Empfangssignal dekodiert wird.

Das in der Figur 1 dargestellte Endgerät 4 sendet je nach Lage des Antennenumschalters 6 über eine erste oder eine zweite Antenne 3. Die Basisstation 1 empfängt das Sendesignal des Endgeräts 4 unabhängig davon welche Antenne ausgewählt wurde. Das Empfangssignal wird durch die Basisstation 1 nachfolgend decodiert, dabei kann die Qualität des Empfangssignals an der Basisstation 1 je nachdem mit welcher Antenne 3 das Endgerät 4 gesendet hat, beispielsweise bezüglich des Signal-Rauch-Verhältnisses oder einer Bitfehlerrate, voneinander abweichen.

Da die Basisstation 1 diese und andere Parameter gezielt auswerten kann, besteht die Möglichkeit, diejenige Antenne für eine Datenübertragung per Befehlswort auszuwählen, welche beispielsweise bezüglich des Parameters Bitfehlerrate ein Minimum erzielt.

Ein Test der Basisstation 1 bezüglich der Steuerung der Antennenumschaltung am Endgerät 4 wird nach dem Stand der Technik beispielsweise derart durchgeführt, dass ein wie oben beschriebenes Endgerät 4 mit mindestens zwei Ausgängen genutzt wird an welche je eine Anordnung zur Kanalsimulation 8, auch als Kanalsimulator bezeichnet, zur Nachbildung der Signalübertragung über einen realen Übertragungskanal, angeschlossen wird. Eine derartige Testanordnung ist in der Figur 2 dargestellt.

Somit wird erstes Sendesignal durch den ersten Kanalsimulator 8a derart verändert, dass eine Übertragung des ersten Sendesignals von der ersten Antenne 3a über eine erste reale Luft-Übertragungsstrecke zu der Antenne 3 der Empfangsanordnung 2 der Basisstation 1 nachgebildet wird. Das zweite Sendesignal wird seinerseits durch den zweiten Kanalsimulator 8b derart verändert, dass eine Übertragung des zweiten Sendesignals von der zweiten Antenne 3b über eine zweite reale Luft-Übertragungsstrecke zu der Antenne 3 der Empfangsanordnung 2 der Basisstation 1 nachgebildet wird.

Die Antennen 3 welche nicht mehr real in der Testanordnung vorhanden sind, werden durch eine direkte Leitungsverbindung zwischen den Baugruppen ersetzt, um Störeinstrahlungen in die Testanordnung zu minimieren. Dieser Ersatz soll durch die Kennzeichnung als 3a und 3b für die Sendeantenne und als 3c für die Empfangsantenne kenntlich gemacht werden.

Für einen derartigen Test werden die zu übertragenden Signale nicht von einer Antenne abgestrahlt oder empfangen. Ein Kopplung zwischen den Ausgängen des Antennenumschalters 6 und den Kanalsimulatoren 8a und 8b erfolgt über Leitungsverbindungen. Auch die Ausgänge der Kanalsimulatoren 8a und 8b sind über Leitungen und eine Summieranordnung 9 zum Zusammenführen beider Signalwege direkt mit dem Eingang der Empfangsanordnung 2 verbunden.

Während des Tests wird der erste Kanalsimulator 8a durch Vorgabewerte für seine zur Simulation einer ersten Übertragungsstrecke veränderlichen Parametern eingestellt, während der zweite Kanalsimulator 8b zur Simulation einer zweiten Übertragungsstrecke ebenfalls mittels seiner veränderlichen Parameter eingestellt wird.

Hierbei können die Vorgabewerte für beide Kanalsimulatoren 8a und 8b gleich oder unterschiedlich sein.

Vorzugsweise bei unterschiedlichen Vorgabewerten für die Kanalsimulatoren 8a und 8b werden von der Basisstation die empfangenen Signale bezüglich ihrer Qualitätsparameter, beispielsweise der Signalstärke, des Signal-Rausch-Abstands oder einer Bitfehlerrate, bewertet. In Abhängigkeit dieser Bewertung wird der Signalweg ermittelt, welcher gemäß den vorgegebenen Parametern eine bestmögliche Datenübertragung gewährleistet. Dieser kann dann durch die Basisstation 1 mittels eines an das Endgerät übermittelten Befehlsworts für eine Datenübertragung ausgewählt werden. In einem derartigen Test werden verschiedene Vorgabewerten für die Kanalsimulatoren 8a und 8b eingestellt und die Bewertung der Signalwege durch die Basisstation 1 überprüft.

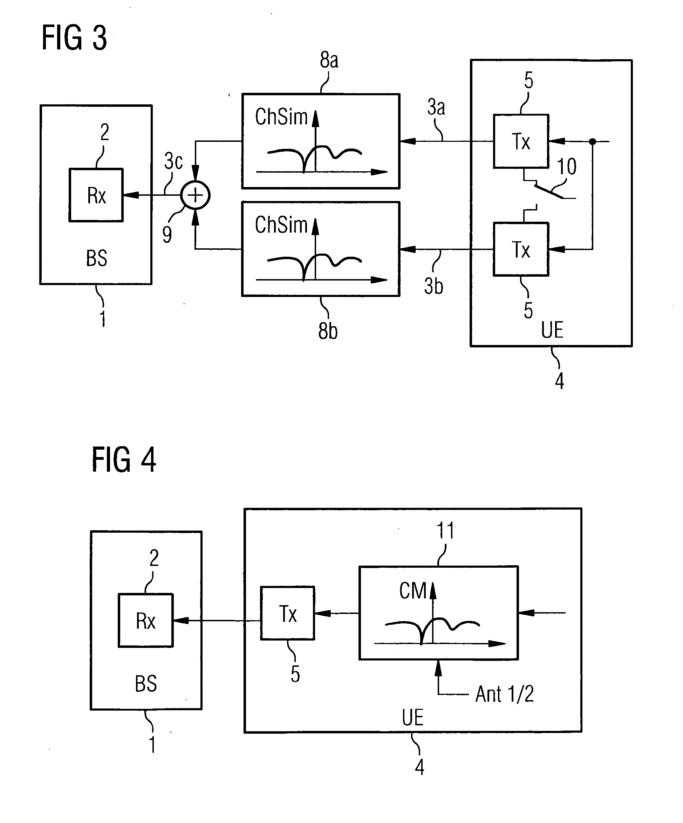

In der Figur 3 ist eine weitere Anordnung für einen Test der Basisstation 1 bezüglich der Steuerung der
Antennenumschaltung am Endgerät dargestellt. Auf diese Anordnung trifft die obige Beschreibung zu bis auf die Ausführung der Anordnung innerhalb des Endgeräts 4.

Dieses Endgerät 4 beinhaltet keinen Antennenumschalter 6. Zur Abbildung zweier Übertragungswege sind zwei Sendeanordnungen 5 angeordnet, welche eingangsseitig miteinander und mit der nicht dargestellten Stufe zur digitalen und analogen Signalverarbeitung verbunden sind.

Somit wir das zu sendende Signal an beiden Eingängen der Sendeanordnungen 5 bereitgestellt. Eine Auswahl einer Sendeanordnung erfolgt über den Umschalter 10, welcher eine erste Sendeanordnung 5 einschaltet und eine zweite Sendeanordnung 5 in der gleichen Zeit abschaltet. Somit wird sichergestellt, dass das Sendesignal nur über einen Signalweg erzeugt wird. Die Veränderung des Sendesignals sowie die Bewertung durch die Basisstation erfolgt wie oben beschrieben.

Die in der Figur 4 dargestellte erfindungsgemäße Lösung für eine Anordnung zum Testen der Basisstation 1 bezüglich ihrer Steuerung der Antennenumschaltung am Endgerät umfasst eine Basisstation 1 mit einer Empfangsanordnung 2.

Weiter dargestellt ist ein Endgerät oder Testendgerät 4, welches eine Sendeanordnung 5 beinhaltet. Dieser Sendeanordnung ist eine Stufe zur digitalen und analogen Signalverarbeitung vorgeschaltet in welcher das zu sendende Signal erzeugt wird. Gemäß der Erfindung erfolgt in dieser Stufe, in welcher das zu sendende Signal in einer digitalen Form vorliegt, eine Veränderung des zu sendenden Signals derart, dass mit dieser Veränderung bereits die zu erwartende Veränderung des Signals über den Signalweg Sendeantenne - Luftübertragungsstrecke - Empfangsantenne abgebildet wird.

Somit steht am Ausgang der Sendeanordnung 5 bereits das Empfangssignal der Empfangsanordnung 2 zur Verfügung, welches nach dem Stand der Technik erst an der Empfangsantenne 3c anliegen würde. Die Verbindung zwischen dem Ausgang der Sendeanordnung 5 und dem Eingang der Empfangsanordnung 2 erfolgt mittels einer Leitungsverbindung, wobei eine Verwendung realer Sende- und Empfangsantenne mit den oben beschrieben Nachteilen auch möglich wäre.

Für die Veränderung des zu sendenden Signals wird ein Kanalmodell 11 genutzt, welche den Übertagungskanal zwischen der Sendeanordnung 5 und der Empfangsanordnung 2 abbildet. Dieses Kanalmodell wird mittel eines Satzes von Vorgabeparametern eingestellt. Erfindungsgemäß werden mindestens zwei Sätze verwendet, mit welchen sich somit zwei Übertragungskanäle oder Übertragungswege simulieren lassen. Diese Sätze können im Endgerät gespeichert werden und können somit zur Einstellung des Kanalmodells schnell abgerufen werden. Eine Übertagung eines Satzes von Vorgabeparametern kann auch von einem externen, beispielsweise den Simulationsablauf steuernden, Steuergerät (PC) erfolgen.

Für eine Simulation eines weiteren Übertragungskanals wird einfach nur ein weiterer Satz von Vorgabeparametern erzeugt und gespeichert.

In einem Testablauf wird dann ein erster Satz von Vorgabeparametern für das Kanalmodell 11 aufgerufen und angelegt, ein erstes verändertes Sendesignal erzeugt und zur Basisstation 1 übertragen. Nach folgend wird ein weiterer Satz von Vorgabeparametern an das Kanalmodell 11 angelegt und ein weiteres verändertes Sendesignal erzeugt und zur Basisstation 1 übertragen. Die Bezeichnung "Ant1/2" in der Figur 4 soll die Möglichkeit der Umschaltung des Kanalmodells 11 auf einen Übertragungsweg mit einer ersten Antenne und einen Übertragungsweg mit einer zweiten Antenne verdeutlichen.

Die Auswertung der Sendesignale erfolgt in der Basisstation wie bereits oben beschrieben.

Somit erfolgt die Simulation der verschiedenen Sendeantennen in Verbindung mit den zugehörigen Übertragungskanälen vom Endgerät 4 zur Basisstation 1 in einer digitalen Domäne mittels eines umschaltbaren Kanalmodells 11.

Vorteilhaft ist hierbei die Verwendung nur einer Sendeanordnung 5 und einer Sendeantenne 3 oder alternativ einer Leitungsverbindung. Durch die Verwendung nur einer Sendeanordnung könne den Test beeinflussende Abweichen der Qualitätsparameter von zwei verschieden Sendeanordnungen 5 ausgeschlossen werden.

### Bezugszeichenliste

- 1: Basisstation BS
- 2: Empfangsanordnung Rx
- 3: Antenne
- 4: Endgerät UE
- 5: Sendeanordnung Tx
- 6: Antennenumschalter
- 7: Anordnung zur Erzeugung eines Sendesignals
- 8: Anordnung zur Kanalsimulation
- 9: Summieranordnung
- 10: Umschalter
- 11: Kanalmodell

## Patentansprüche

1. Anordnung zum Testen der Funktionalität einer Basisstation, bestehend aus einer zwei Empfangswege hinsichtlich ihrer Empfangsgüte auswählenden Basisstation und einem ein Endgerät simulierenden Testendgerät, welches eine Sendestufe mit einem Antennenausgang aufweist, **dadurch gekennzeichnet, dass** das Testendgerät eine zwischen zwei Übertragungskanälen umschaltbare Anordnung zur Kanalsimulation aufweist, welche in Sendesignallaufrichtung vor der Sendestufe angeordnet ist.

2. Verfahren zum Testen der Funktionalität einer Basisstation, wobei ein ein Endgerät simulierendes Testendgerät zur Basisstation ein erstes Testsignal sendet, welches durch einen ersten Übertragungsweg verändert, von der Basisstation als erstes Empfangssignal empfangen wird und nachfolgend das Testendgerät zur Basisstation ein zweites Testsignal sendet, welches durch einen zweiten Übertragungsweg verändert, von der Basisstation als zweites Empfangssignal empfangen wird, **dadurch gekennzeichnet, dass** das Testsignal vor dem Senden im Testendgerät derart verändert wird, dass ein erstes mit einem ersten Übertragungsweg verändertes erstes Empfangssignal oder ein zweites über einen zweiten Übertragungsweg verändertes zweites Empfangssignal ausgegeben wird.

3. Verfahren nach Anspruch 2, **dadurch gekennzeichnet, dass** die Veränderung des Testsignals in seiner digitalen Form erfolgt.
